(19) Europäisches Patentamt / European Patent Office / Office européen des brevets

(11) **EP 3 547 221 B1**

(12) **EUROPÄISCHE PATENTSCHRIFT**

(45) Veröffentlichungstag und Bekanntmachung des Hinweises auf die Patenterteilung:
**07.07.2021   Patentblatt 2021/27**

(51) Int Cl.:
*G06K 15/10* *(2006.01)*    *B41J 2/21* *(2006.01)*

(21) Anmeldenummer: **18164503.7**

(22) Anmeldetag: **28.03.2018**

(54) **VERFAHREN ZUM BEDRUCKEN DER OBERFLÄCHE EINES OBJEKTS**

METHOD FOR PRINTING THE SURFACE OF AN OBJECT

PROCÉDÉ D'IMPRESSION DE LA SURFACE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.10.2019   Patentblatt 2019/40**

(73) Patentinhaber: **Heidelberger Druckmaschinen AG
69115 Heidelberg (DE)**

(72) Erfinder: **Ernst, Uwe
68163 Mannheim (DE)**

(56) Entgegenhaltungen:
**EP-A1- 2 875 953       WO-A1-2008/040968
US-A1- 2003 132 979**

**Beschreibung**

Erfindung

Die Erfindung betrifft ein Verfahren mit den Merkmalen des Oberbegriffs von Anspruch 1.

Technisches Gebiet der Erfindung

Die Erfindung liegt auf dem technischen Gebiet der grafischen Industrie und dort insbesondere im Bereich des industriellen Tintendrucks (Inkjet) auf dreidimensionale Objekte, d.h. des Auftragens (und Härtens oder Trocknens) von flüssiger Tinte auf Freiformflächen, bevorzugt aus Kunststoff oder Metall.

Stand der Technik

Bei dem bekannten DOD-Tintenstrahldruckverfahren (drop-on-demand) wird ein Druckbild auf einer beliebig geformten, z.B. gekrümmten Objektoberfläche erzeugt, indem ein Tintendruckkopf (kurz: Kopf) mit einzeln ansteuerbaren Düsen dem zu druckenden Bild entsprechend feinste Tintentropfen, bevorzugt im Pikoliter-Bereich, erzeugt und diese berührungslos auf die Oberfläche überträgt. Das Ansteuern der Düsen kann mittels Piezoaktoren erfolgen. Dabei wird eine gedrückte Bahn auf der Oberfläche erzeugt. Mehrere solcher Bahnen können benachbart zueinander liegen, d.h. aneinander anschließen, und dadurch einen Druckbereich abdecken. Zur Erzeugung einer Relativbewegung zwischen Kopf und Oberfläche kann der Kopf bewegt und/oder das Objekt bewegt oder rotiert werden, wobei jeweils ein Roboterarm mit mehreren Schub und/oder Drehgelenken zum Einsatz kommen kann.

Der sogenannte Bahnanschluss zwischen von einem Druckkopf benachbart gedruckten Bahnen kann "hart" sein, d.h. zwei benachbarte Bahnen weisen in diesem Fall keinen Überlapp auf. Ein solcher Bahnanschluss ist zumeist mit dem bloßen Auge erkennbar und daher störend, insbesondere in gedruckten Vollflächen. Daher wird bevorzugt ein "weicher" Bahnanschluss gewählt, bei dem die beiden Bahnen in Y-Richtung bzw. Querrichtung der Bahn, also senkrecht zur X-Richtung bzw. Längsrichtung der Bahn, verzahnen (im Englischen und inzwischen auch im Deutschen als "Stitching" bezeichnet). Dieses Stitching kann ortsaufgelöst erfolgen, d.h. jeder Druckpunkt im Überlapp-Bereich der beiden Bahnen wird der einen oder der anderen Bahn zugeordnet und entsprechend gedruckt, wenn der Druckkopf die eine oder die andere Bahn druckt. Dabei kann in Y-Richtung (Y-Stitching) eine kammartige Verteilung oder eine Zufallsverteilung gewählt werden. Zusätzlich kann auch in X-Richtung gestitcht werden (X-Stitching), z.B. ebenfalls unter Einsatz einer Zufallsverteilung. Wird gleichzeitig in beiden Richtungen gestitcht bzw. verzahnt, so bezeichnet man dies als X-Y-Stitching

Die EP1217578A2 offenbart ein Bildverarbeitungsverfahren und eine Vorrichtung. Mehrere hintereinander angeordnete Druckköpfe werden in X-Richtung über ein Substrat geführt und dabei wird eine Bahn gedruckt. Danach wird das Substrat in Y-Richtung weiterbewegt. Eine weitere Bahn wird gedruckt und dabei X-Y-gestitcht.

Die im Internet (unter der Homepage http://www.globalinkjetsystems.com) öffentlich zugängliche Präsentation "Analysing, Understandung & Improving Image Quality" (Debbie Thorp, Business Development Director, Orlando, February, 2015, IMI - Inkjet Printing Conference) befasst sich auf den Seiten 26 und 27 ebenfalls mit der Thematik des X-Y-Stitchings.

Die EP1671800A2 offenbart ein Druckkopf-System zum Minimieren des sogenannten Stitching-Fehlers. Dabei kommen zwei fest angeordnete Druckköpfe zum Einsatz und jeder Kopf druckt eine eigene Bahn. Im Überlappbereich der beiden Bahnen wird X-Y-gestitcht. Zusätzlich wird auch die Tintenmenge am Ort eines Druckpunkts gestitcht, d.h. die Druckpunkte im Überlapp-Bereich setzten sich aus Tinte beider Bahnen zusammen, wobei eine Zufallsverteilung gewählt werden kann, um mit dem Auge wahrnehmbare Störungen zu vermeiden.

Die EP 2 875 953 A1, die den Oberbegriff des Anspruchs 1 formt, offenbart ein gattungsgemäßes Verfahren zum Drucken eines zweidimensionalen Bitmap-Bildes mit einer Anzahl von Pixeln pro Zeile z.B. unter Anwendung einer Vielzahl von einander überlappenden Druckköpfen.

Die US 2003/132979 A1 offenbart Verfahren zum Reduzieren von Stichverbindungsfehlern, umfassend: Drucken einer ersten Anzahl von Bilddaten auf ein flüssiges Aufzeichnungsmedium; Vorwärtsbewegen des Aufzeichnungsmedium in eine Position; Erfassen der Position des Aufzeichnungsmedium; Bestimmen einer relativen Position des Aufzeichnungsmediums in Bezug auf einen Druckkopf; Bestimmen, ob ein Stichverbindungsfehler auftritt; Verschieben der Bilddaten im Druckkopf für einen nächsten Druck, falls ein Stichverbindungsfehler auftritt; und Erzeugen der Bilddaten mit einer oder mehreren Düsen im Druckkopf, um die nächste Menge von Bilddaten zu drucken.

Im Stand der Technik kann das Problem auftreten, dass trotz der ergriffenen Maßnahmen im Überlapp-Bereich immer noch mit dem Auge wahrnehmbare Störungen erzeugt werden: Der Druck kann insbesondere "unruhig" wirken und die Qualität des erzeugten Druckprodukts kann darunter leiden.

Aufgabe

Es ist daher eine Aufgabe der Erfindung, eine Verbesserung gegenüber dem Stand der Technik zu schaffen, welche es insbesondere ermöglicht, Druckprodukte hoher oder höchster Qualität zu erzeugen und dabei insbesondere mit dem Auge wahrnehmbare Störungen in einem Überlapp-Bereich bzw. Streifen benachbart gedruckter Bahnen zu vermeiden.

Erfindungsgemäße Lösung

Diese Aufgabe wird erfindungsgemäß durch ein Verfahren nach Anspruch 1 gelöst. Vorteilhafte und daher bevorzugte Weiterbildungen der Erfindung ergeben sich aus den Unteransprüchen sowie aus der Beschreibung und den Zeichnungen.

Ein erfindungsgemäßes Verfahren zum Bedrucken der Oberfläche eines Objekts, wobei ein Tintentropfen erzeugender Druckkopf wenigstens zwei zueinander benachbarte und sich in einem Streifen überlappende Bahnen aus Tinte auf die Oberfläche druckt, d.h. eine erste Bahn und nachfolgend eine zweite Bahn druckt, wobei die beiden Bahnen als Vollflächen gedruckt werden, wobei die Bahnen in dem Streifen X-Y-gestitcht (Tintenort-Stitching) werden, und wobei wenigstens eine der beiden Bahnen in dem Streifen zusätzlich unter Einsatz einer Funktion für den Y-Verlauf der Tintenmenge gestitcht wird, zeichnet sich dadurch aus, dass die Art der Funktion entlang der beiden Bahnen variiert wird oder dass die Breite des Streifens entlang der beiden Bahnen variiert wird.

Die Erfindung ermöglicht in vorteilhafter Weise, Druckprodukte, insbesondere bedruckte Objekte oder Körper, hoher oder höchster Qualität zu erzeugen und dabei insbesondere mit dem Auge wahrnehmbare Störungen in einem Überlapp-Bereich bzw. dem Streifen benachbart gedruckter Bahnen zu vermeiden.

Anstelle eines Druckkopfs können auch mehrere Druckköpfe eingesetzt werden, z.B. vier für die Farben CMYK. Der eine Druckkopf oder die mehreren Druckköpfe können eine Düsenzeile oder jeweils mehrere Düsenzeilen aufweisen.

Die Bahnen können geradlinig oder gekrümmt verlaufen, z.B. auch mehrere Kurven in verschiedene Richtungen aufweisen.

Eine Vollfläche ergibt sich, wenn die von dem Kopf auf das Objekt applizierten Tintentropfen bzw. die von den Tropfen auf der Objektoberfläche gebildeten Pixel (bzw. die von den Pixeln gebildeten Druckpunkte) durch Zusammenfließen eine im Wesentlichen geschlossene Tintenschicht bzw. einen Film bilden. Die Vollfläche kann z.B. mit farbiger Tinte, Deckweiß, Precoat oder Lack gedruckt werden. Es können auch Sonderfarben als Tinte gedruckt werden.

Der erfindungsgemäße Schritt, dass wenigstens eine der beiden Bahnen in dem Streifen zusätzlich unter Einsatz einer Funktion für den Y-Verlauf der Tintenmenge gestitcht wird kann auch als Grauwert-Stitching oder Tintenmengen-Stitching bezeichnet werden.

Die Erfindung hat den Vorteil, dass durch die Kombination des X-Y-Stitchings mit dem Funktions-basierten Grauwert-Stitching selbst feinste, mit dem Auge eben noch wahrnehmbare Störungen in dem Überlapp-Bereich bzw. dem Streifen benachbart gedruckter Bahnen effektiv vermieden werden können. Das Druckbild wirkt entsprechend ruhig. Die Erfindung geht somit einen anderen Weg als der Stand der Technik, der versucht, die Druckqualität allein durch immer ausgefeiltere X-Y-Stitching-Verfahren zu erhöhen. Die Erfindung geht zudem auch einen anderen Weg als der Stand der Technik, der versucht, durch Einsatz von Zufallsmustern im Grauwert-Stitching störende Effekte zu kaschieren und dadurch die Druckqualität zu erhöhen. Erst umfangreiche Tests im Rahmen einer Lösungssuche zeigten den erfolgreichen Weg auf, nämlich neben dem bekannten X-Y-Stitching ein Funktions-basiertes Grauwert-Stitching zu verwenden. "Funktions-basiert" bedeutet dabei, dass keine Zufallsverteilung für das Grauwert-Stitching gewählt wird, sondern ein (von einer Zufallsverteilung verschiedener) funktionaler, bevorzugt stetiger oder besonders bevorzugt zur benachbarten Bahn hin stetig abnehmender Verlauf. Nur auf diese Weise konnten zufrieden stellend ruhig Druckbilder erzeugt werden.

Für das X-Y-Stitching kann folgendes Vorgehen gewählt werden: Mit Hilfe eines ortsabhängigen Zufallsfaktors wird ausgewählt, ob ein Pixel (Druckpunkt) im Überlapp-Streifen der ersten oder der zweiten Bahn zugeordnet wird. Dabei wird berücksichtigt, dass es wahrscheinlicher ist, dass ein Pixel der ersten Bahn zugeordnet wird, wenn es näher auf der Seite der ersten Bahn liegt und unwahrscheinlicher, wenn es näher auf der Seite der zweiten Bahn liegt. Umgekehrt ist es wahrscheinlicher, dass ein Pixel der zweiten Bahn zugeordnet wird, wenn es näher auf der Seite der zweiten Bahn liegt und unwahrscheinlicher, wenn es näher auf der Seite der ersten Bahn liegt. ""Nähe zur Bahn" meint dabei z.B. den Abstand zur Mitte der jeweiligen Bahn. Dadurch wird gewährleistet, dass die Anzahl der Pixel der ersten Bahn im Übergangsbereich (Streifen) zwischen erster und zweiter Bahn kontinuierlich von der ersten Bahn zur zweiten Bahn hin abnimmt und im Gegenzug die Anzahl der Pixel, die der zweiten Bahn zugeordnet werden von der ersten zur zweiten Bahn hin kontinuierlich zunimmt.

Der ortsabhängige Zufallsfaktor f kann bevorzugt wie folgt berechnet werden:

$$f=(\ (\text{Abstand A zu zweiter Bahn})^{\wedge}x\ /\ ((\text{Abstand A zu zweiter Bahn})^{\wedge}x+(\ \text{Abstand A zu erster Bahn})^{\wedge}x)\ )$$

wobei gilt:

Abstand A ist die Y-Position im Streifen (z.B. Werte von 0 bis 249, wobei Bahn 1 = Position 0 und Bahn 2 = Position 249); und
x ist die Potenz bzw. Ordnung h (Werte von 0 bis 20);

Damit das (aus Bahnen) zu druckende Bild nach den X-Y-Stitching-Mustern aufgeteilt werden kann, wird das Bild bevorzugt zunächst komplett fertig in einem digitalen RIP-Prozess gerippt und liegt daher in den einzelnen Farbauszügen vor. Um das Ineinanderfließen der Tinte von beiden Bahnen zu unterstützen, ist es hilfreich und daher bevorzugt, die erste Bahn nur teilweise zu pinnen, indem z.B. eine Strahlungsquelle gegenüber der Bahn quer versetzt über die Oberfläche geführt wird. Erst beim Pinnen der zweiten Bahn wird dann bevorzugt auch der Überlapp-Bereich komplett gepinnt.

Bei dem erfindungsgemäßen "Grauwert-Stitching" wird bevorzugt zunächst ein Muster in Form einer Gaußschen Glockenkurve berechnet, wobei für die Schwelle S gilt:

$$S=e^{\wedge}((\text{Faktor F} * (\text{Y-Position} - \text{Mitte M}))^{\wedge}2)$$

Damit können Verteilungen erzeugt werden, deren Breite und Mittelpunkt über die Variablen "Faktor F" und "Mitte M" einstellbar sind.

Es ist nun in vorteilhafter Weise möglich, das vorher berechnete X-Y-Stitching mit dieser Grauwert-Glockenkurve zu kombinieren: Wenn an einer Position kein Grauwert-Stitching stattfinden soll, so kann das ganze Pixel so gedruckt werden, wie im X-Y-Stitching vorgesehen (Bahn 1 oder Bahn 2). Soll an einer Position ein Grauwert-Stitching stattfinden, so kann abhängig davon, ob das Pixel in Bahn 1 oder Bahn 2 geschrieben werden soll, ein Grauwert für die Bahn 1 und ein Grauwert für die Bahn 2 festgelegt werden.

Die Verteilung von Bahn 1 und Bahn 2 können z.B. für Faktor F=-0,0004 (eine breite Glockenkurve), Mitte =110 (etwas außerhalb der Mitte von 125 Pixeln) und einer Potenz von h=20 (generiert einen schmalen X-Y-Stitching-Bereich) gewählt werden.

Weiterbildungen der Erfindung

Eine bevorzugte Weiterbildung der Erfindung kann sich dadurch auszeichnen, dass die erste Bahn in dem Streifen ausschließlich X-Y-gestitcht wird und dass die zweite Bahn in dem Streifen sowohl X-Y-gestitcht als auch zusätzlich unter Einsatz der vorgegebenen Funktion für den Y-Verlauf der Tintenmenge gestitcht wird. Dieses Vorgehen kann als "asymmetrisch" bezeichnet werden. Es hat sich in umfangreichen Tests gezeigt, dass ein solches asymmetrisches Verfahren besonders gute Resultate hinsichtlich der erreichbaren Druckqualität liefert. Bevorzugt ist die Funktion für den Y-Verlauf der Tintenmenge dergestalt, dass die auf der zweiten Bahn gedruckte Tintenmenge im Streifen mit einem Gradienten in Y-Richtung zur ersten Bahn hin abnimmt. Besonders bevorzugt wird als Funktion eine Gaußsche Glockenkurve vorgegeben bzw. nur die Hälfte einer solchen Kurve, also nur eine von der Mitte der Kurve aus abfallende Flanke der Kurve. Alternativ kann auch die Flanke einer Sinuskurve verwendet werden. Es sollte aber immer auf stetige Übergänge geachtet werden.

Eine bevorzugte Weiterbildung der Erfindung kann sich dadurch auszeichnen, dass auf der zweiten Bahn Tintentropfen in dem Streifen derart gedruckt werden, dass gemäß des X-Y-Stitchings auf der zweiten Bahn nicht zu druckende Stellen dennoch zusätzlich unter Einsatz der vorgegebenen Funktion für den Y-Verlauf der Tintenmenge gestitcht und gedruckt werden. Es werden demnach auf der zweiten Bahn Tintentropfen an Orten gedruckt, an denen bereits Tintentropfen maximaler Größe auf der ersten Bahn gedruckt wurden. Dieses Vorgehen kann bevorzugt mit dem asymmetrischen Verfahren kombiniert werden. Eine solche Kombination wurde in umfangreichen Tests als besonders vorteilhaft erkannt.

Eine bevorzugte Weiterbildung der Erfindung kann sich dadurch auszeichnen, dass eine Breite der Funktion entlang der beiden Bahnen variiert wird. Es kann z.B. eine Gaußsche Glockenkurve (oder nur deren Flanke) in ihrer Breite variiert werden, z.B. in Bahn-Längsrichtung zufallsgesteuert oder periodisch.

Eine bevorzugte Weiterbildung der Erfindung kann sich dadurch auszeichnen, dass das Variieren der Art der Funktion durch ein Wechseln zwischen Kurven unterschiedlicher Ordnung erfolgt, insbesondere zwischen einer Kurve zweiter Ordnung und wenigstens einer Kurve höherer Ordnung. Es kann z.B. eine Gaußsche Glockenkurve (oder nur deren Flanke) gegen eine andere Funktion, z.B. eine Kurve höherer Ordnung, ausgetauscht werden, z.B. in Bahn-Längsrichtung zufallsgesteuert oder periodisch.

Eine bevorzugte Weiterbildung der Erfindung kann sich dadurch auszeichnen, dass in stark gekrümmten Oberflächenbereichen des Objekts bevorzugt eine geringere Breite (z.B. nur 50%) vorgegeben wird, als in weniger stark gekrümmten oder ebenen Bereichen.

Eine bevorzugte Weiterbildung der Erfindung kann sich dadurch auszeichnen, dass das Variieren unter Einsatz einer vorgegebenen weiteren Funktion für den Verlauf der Breite des Streifens erfolgt, insbesondere unter Einsatz einer sinusförmigen Funktion.

Eine bevorzugte Weiterbildung der Erfindung kann sich dadurch auszeichnen, dass die Funktion und/oder die weitere Funktion in Abhängigkeit des Materials oder der Struktur der Oberfläche oder des Materials oder der Struktur einer Beschichtung der Oberfläche ausgewählt werden. Es kann z.B. bei saugenden Objektoberflächen eine andere Funktion gewählt werden, als bei nicht saugenden Objektoberflächen.

Eine bevorzugte Weiterbildung der Erfindung kann sich dadurch auszeichnen, dass die beiden Bahnen unter Einsatz einer Strahlungsquelle und/oder Wärmequelle gepinnt werden, d.h. die Tinte teilgehärtet und/oder teilgetrocknet wird. Die Quelle kann z.B. eine UV-Quelle oder eine IR-Quelle sein.

Die Merkmale der Erfindung, der Weiterbildungen der Erfindung und der Ausführungsbeispiele zur Erfindung stellen auch in beliebiger Kombination miteinander vorteilhafte Weiterbildungen der Erfindung dar. Weiterbildungen der Erfindung können zudem die - im obigen Abschnitt "Technisches Gebiet der Erfindung" offenbarten - Einzelmerkmale oder Merkmalskombinationen aufweisen.

Ausführungsbeispiele zur Erfindung

Die Erfindung und deren bevorzugte Weiterbildungen werden nachfolgend unter Bezug auf die Zeichnungen anhand eines bevorzugten Ausführungsbeispiels näher beschrieben. Einander entsprechende Merkmale sind in den Figuren mit denselben Bezugszeichen versehen.

Die Zeichnungen zeigen:

Figur 1      Eine Vorrichtung bei der Durchführung des Verfahrens;
Figur 2a      Ein Überlapp-Streifen;
Figur 2b      Ein weiterer Überlapp-Streifen
Figur 3      Eine Funktion; und
Figur 4      Eine weitere Funktion.

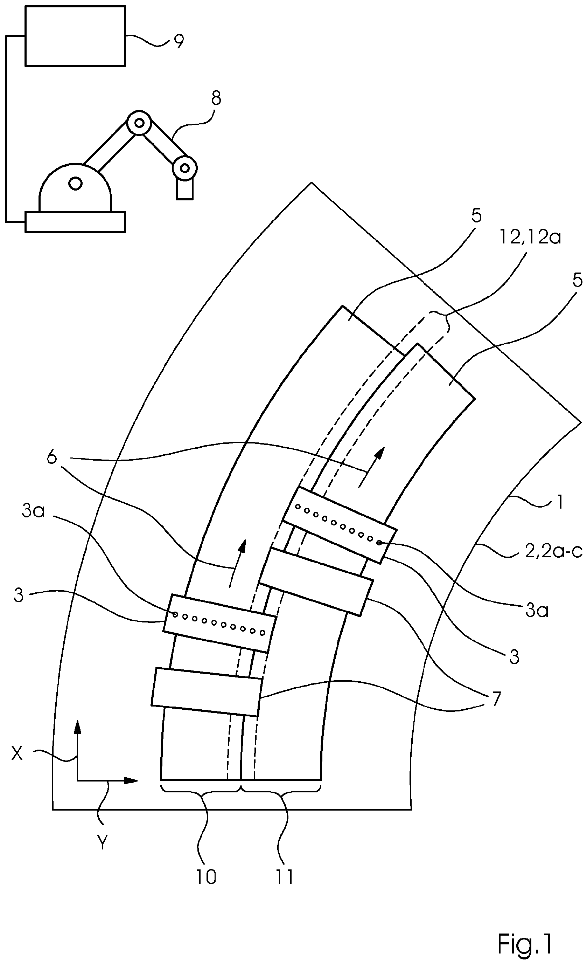

Figur 1 zeigt eine Draufsicht einer Vorrichtung bei der Durchführung eines bevorzugten Ausführungsbeispiels des erfindungsgemäßen Verfahrens.

In Figur 1 ist ein Objekt 1, z.B. ein 3D-Körper, mit seiner (in einer Raumrichtung oder bevorzugt in zwei Raumrichtungen) gekrümmten Oberfläche 2 gezeigt. Diese Oberfläche kann auch eine Beschichtung 2a aufweisen. Die Oberfläche oder die Beschichtung der Oberfläche besteht aus einem Material 2b, wie z.B. Kunststoff oder Metall, und kann gegebenenfalls auch eine Struktur 2c, z.B. eine raue Oberfläche, aufweisen.

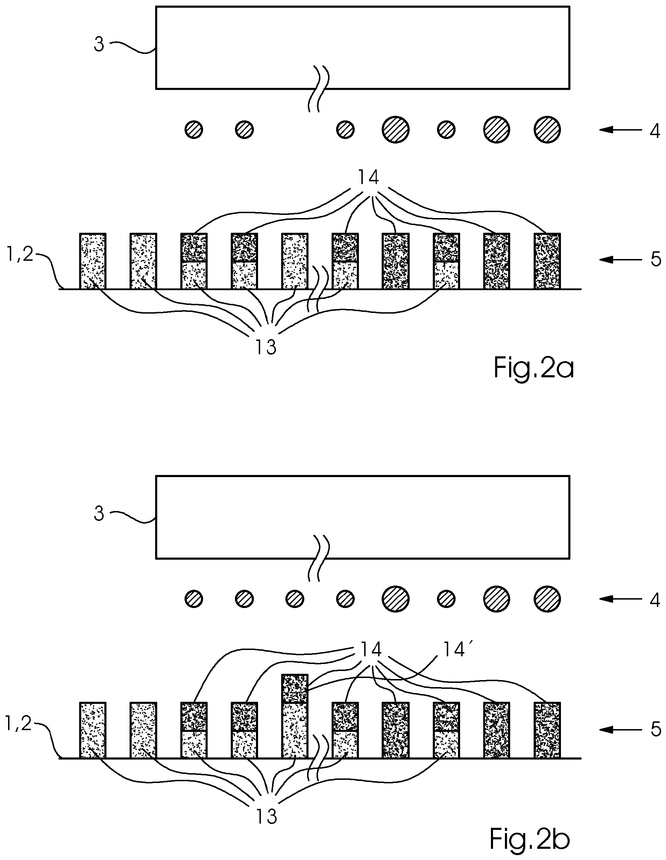

Figur 1 zeigt auch einen Tinten-Druckkopf 3 mit einer Reihe von Tinten-Düsen 3a zum Ausstoßen von Tintentropfen 4 (vgl. auch Figuren 2a und 2b). Mittels der Tintentropfen 4 wird flüssige Tinte 5 auf die Oberfläche 2 übertragen und die Tintentropfen bilden auf der Oberfläche entsprechende Druckpunkte 5. Die Druckpunkte fließen zu einer geschlossenen Tintenfläche zusammen, d. h. es wird eine Vollfläche gedruckt.

Weiterhin zeigt Figur 1, dass der Druckkopf 3 entlang einer Richtung 6 über die Oberfläche 2 bewegt wird. Dabei druckt der Druckkopf zunächst eine erste Bahn 10 und anschließend und benachbart zur ersten Bahn eine zweite Bahn 11. X ist dabei die Längsrichtung der beiden Bahnen 10 und 11, Y senkrecht dazu die Querrichtung.

Figur 1 lässt erkennen, dass die beiden Bahnen 10 und 11 in einem Streifen 12 überlappen. Der Streifen weist eine Breite 12a auf. Die Breite des Streifens kann z.B. 250 Pixel betragen (oder kleiner, z.B. 128 oder 64 Pixel). Im Bereich des Streifens erfolgt erfindungsgemäß das Stitchen (oder das "Verzahnen"), d.h. Druckpunkte 5 im Streifen werden vom Druckkopf 3 auf der ersten Bahn 10 oder der zweiten Bahn 11 gedruckt. Einzelne Druckpunkte können auch auf beiden Bahnen gedruckt werden. Näheres ist mit Bezug zu den beiden Figuren 2a und 2b beschrieben.

Weiterhin zeigt Figur 1 einen Roboterarm 8, mit dessen Hilfe der Druckkopf 3 über die Oberfläche 2 geführt werden kann. Die Steuerung des Roboterarms erfolgt über eine Steuerung 9. Die Steuerung 9 kann auch den Druckkopf 3 mit den zu druckenden Daten ansteuern. Zusätzlich kann auch eine Strahlungsquelle 7 oder Wärmequelle 7 unter Einsatz des Roboterarms 7 entlang der beiden Bahnen 10 und 11 bewegt werden. Mittels der Quellen kann die in den Bahnen aufgetragene Tinte 4 teilgehärtet oder teilgetrocknet werden, was auch als Pinnen bezeichnet wird.

Figur 2a zeigt eine schematische Seitenansicht eines mit einem bevorzugten Ausführungsbeispiel des erfindungsgemäßen Verfahrens gedruckten Überlapp-Streifens 12.

In Figur 2a ist wiederum der Druckkopf 3 gezeigt, welcher Tintentropfen 4 auf das Objekt 1 bzw. seine Oberfläche 2 überträgt. Die übertragenen Tintentropfen sind als Druckpunkte bzw. Tinte 5 auf der Oberfläche des Objektes dargestellt. Die Höhe der dargestellten Säulen entspricht der übertragenen Tintenmenge. Die Tintentropfen bilden auf der Oberfläche tatsächlich keine Säulen, sondern eher kuppelartige Strukturen, die zudem ineinander verfließen und somit eine Vollfläche bzw. einen im Wesentlichen geschlossenen Tintenfilm bilden. Insofern sind die dargestellten Säulen nur zur Verdeutlichung der Auftragungsorte der Tinte und der am jeweiligen Ort aufgetragenen Menge der Tinte zu verstehen.

Figur 2a ist zu entnehmen, dass an bestimmten Orten Tinte 13 aufgetragen ist, welche von Druckpunkten auf der ersten Bahn 10 stammen. Das heißt, diese Tinte 13 wurde beim Bewegen des Druckkopfs 3 entlang der ersten Bahn 10 gedruckt. Weiterhin lässt Figur 2a erkennen, dass Tinte 14 auf der zweiten Bahn 11 aufgetragen wurde. Das heißt, diese Tinte 14 wurde beim Bewegen des Druckkopfs 3 entlang der zweiten Bahn 11 gedruckt. An manchen Orten ist nur Tinte 13 der ersten Bahn aufgetragen. An manchen Orten ist nur Tinte 14 der zweiten Bahn aufgetragen. Es gibt allerdings auch Orte, an denen Tinte 13 und 14 aufgetragen ist. Das bedeutet, dass an diesen Orten der Druckkopf 3 sowohl auf der ersten Bahn 10 als auch auf der zweiten Bahn 11 Tinte überträgt.

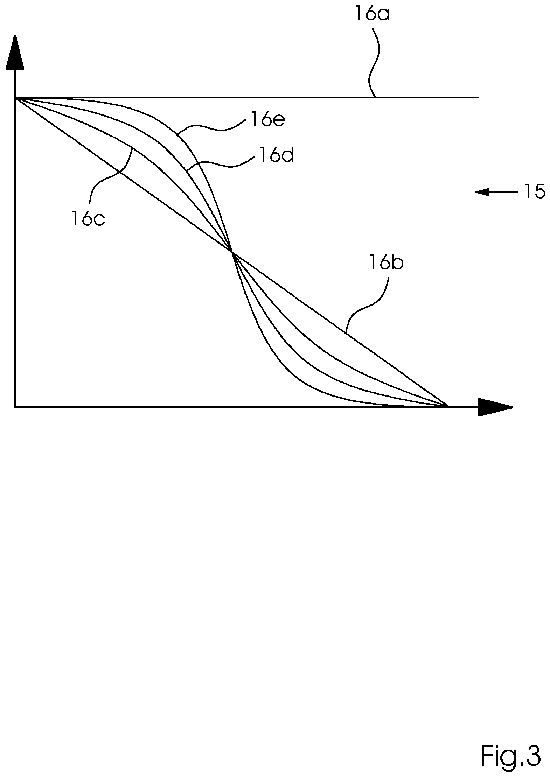

Somit ist in Figur 2a erkennbar, dass das Stitching zwischen der ersten Bahn 10 und der zweiten Bahn 11 sowohl ein X-Y-Stitching ist, als auch zusätzlich ein Stitching für den Y-Verlauf der Tintenmenge (Verlauf quer zur Längsrichtung der Bahnen 10 und 11 oder des Streifens 12). Dieser Verlauf der Tintenmenge (in der Figur 2a beispielsweise von links nach rechts) ist kein zufälliger Verlauf, sondern entspricht einer vorgegebenen Funktion 15 (vgl. Figur 3). In Figur 2a ist auch erkennbar, dass die Tintentropfen 4 verschiedene Größen aufweisen können. Durch den Auftrag von Tintentropfen mit unterschiedlichen Tintenvolumen kann die an jedem Ort übertragene Tintenmenge gezielt entsprechend der vorgegebenen Funktion gesteuert werden. Es kann z.B. vorgesehen sein, die Tintenmenge entsprechend einer Gaußschen Glockenkurve quer zum Streifen 12 bzw. entlang der Streifenbreite 12a zu variieren.

Mit einem Druckkopf 3 der sieben verschiedene Tropfengrößen drucken kann, können bevorzugt Tropfen der Größe "vier" auf der ersten Bahn und Tropfen der Größe "fünf" auf der zweiten Bahn gedruckt werden. Auf diese Weise wurden in Test sehr gute Ergebnisse erzielt.

Figur 2b zeigt eine schematische Ansicht eines weiteren, mit einem weiteren bevorzugten Ausführungsbeispiel des erfindungsgemäßen Verfahrens gedruckten Überlapp-Streifens 12.

Figur 2b zeigt wiederum den Druckkopf 3 beim Übertragen von Tinte 5 auf das Objekt 1 bzw. dessen Oberfläche. Es sind wie in Figur 2a Tintensäulen dargestellt, die die Orte und die Menge der übertragenen Tinte schematisch verdeutlichen sollen.

Entsprechend der Ausführungsform der Figur 2a wird auch bei dieser Ausführungsform sowohl X-Y-gestitcht, als auch zusätzlich unter Einsatz einer vorgegebenen Funktion 15 für den Y-Verlauf der Tintenmenge gestitcht. Zusätzlich ist jedoch erkennbar, dass an einem exemplarischen Druckpunkt 14' sowohl Tinte 13 auf der ersten Bahn 10 als auch Tinte 14 auf der zweiten Bahn 11 gedruckt wurde. Dabei wurde auf der ersten Bahn 10 bereits 100% der Tintenmenge aufgetragen. Insgesamt wird also mehr als 100% Tintenmenge aufgetragen. Es erfolgt also auf der zweiten Bahn 11 ein zusätzlicher Tintenauftrag 14'.

Figur 3 zeigt eine in einem bevorzugten Ausführungsbeispiel des erfindungsgemäßen Verfahrens verwendete Funktion bzw. Kurvenschar.

In Figur 3 ist eine Funktion 15 dargestellt. Konkret ist die Funktion 15 als eine Schar von Kurven n-ter Ordnung dargestellt. Dabei entspricht die Kurve 16a der nullten Ordnung, 16b der ersten Ordnung, 16c der zweiten Ordnung (bzw. einer Gaußschen Glockenkurve), 16d der dritten Ordnung und 16e der vierten Ordnung. Die Abszissen-Achse entspricht der Y-Richtung und zeigt den Bereich der Breite 12a des Streifens 12. Die Ordinaten-Achse entspricht der variablen Tintenmenge zwischen 0 und 100%. Für die Durchführung des erfindungsgemäßen Verfahrens kann eine Kurve n-ter Ordnung ausgewählt und vorgegeben werden. Bevorzugt wird die Kurve 2-ter Ordnung gewählt. Es können auch zwei oder mehr Kurven ausgewählt werden und es kann während des Druckens zwischen diesen Kurven gewechselt werden, insbesondere kann zwischen einer Kurve 2-ter Ordnung und einer Kurve 3-ter Ordnung gewechselt werden.

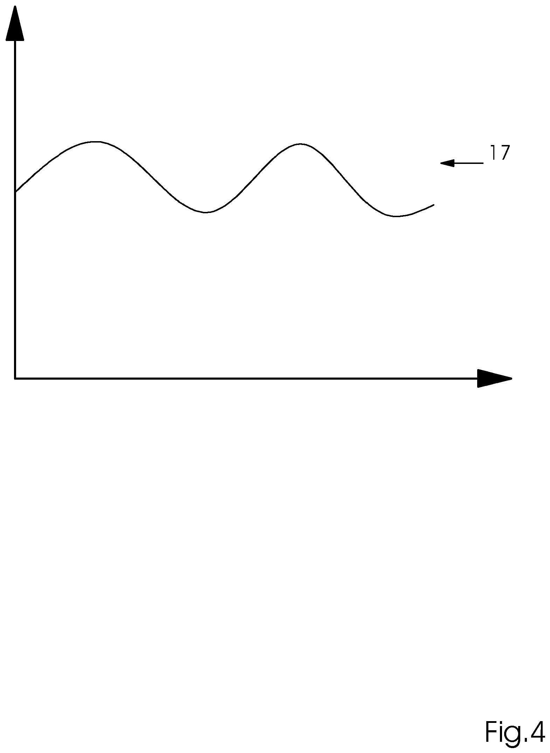

Figur 4 zeigt eine in einem bevorzugten Ausführungsbeispiel des erfindungsgemäßen Verfahrens verwendete weitere Funktion.

In Figur 4 ist eine weitere Funktion 17 dargestellt, vorzugsweise eine sinusförmige Funktion. Diese weitere Funktion kann für den Verlauf der Breite des Streifens 12 vorgegeben werden.. Die Abszissen-Achse entspricht der X-Richtung und zeigt einen Bereich entlang der Längsrichtung des Streifens 12. Die Ordinaten-Achse entspricht der variablen Breite 12a des Streifens 12. Dabei kann die maximale Breite 12a bevorzugt mit 250 Pixel vorgegeben werden.

**Bezugszeichenliste**

1        Objekt

| | |
|---|---|
| 2 | Oberfläche |
| 2a | Beschichtung der Oberfläche |
| 2b | Material der Oberfläche |
| 2c | Struktur der Oberfläche |
| 3 | Druckkopf |
| 3a | Düsen |
| 4 | Tintentropfen |
| 5 | Tinte/Druckpunkte |
| 6 | Richtungen |
| 7 | Strahlungsquelle / Wärmequelle |
| 8 | Roboterarm |
| 9 | Steuerung |
| 10 | Erste Bahn |
| 11 | Zweite Bahn |
| 12 | (Überlapp-) Streifen |
| 12a | Breite des Streifens |
| 13 | Tinte / Druckpunkte auf der ersten Bahn |
| 14 | Tinte / Druckpunkte auf der zweiten Bahn |
| 14' | Tinte / Druckpunkt auf der zweiten Bahn |
| 16 | Funktion |
| 16a - e | Kurven n-ter Ordnung |
| 17 | weitere Funktion |
| | |
| X | Längsrichtung der Bahnen und des Streifens |
| Y | Querrichtung der Bahnen und des Streifens |

6. Verfahren nach einem der vorhergehenden Ansprüche,
**dadurch gekennzeichnet,**
dass das Variieren unter Einsatz einer vorgegebenen weiteren Funktion (17) für den Verlauf der Breite des Streifens (12) erfolgt.


**Patentansprüche**

1. Verfahren zum Bedrucken der Oberfläche (2) eines Objekts (1), wobei ein Tintentropfen (4) erzeugender Druckkopf (3) wenigstens zwei zueinander benachbarte und sich in einem Streifen (12) überlappende Bahnen (10, 11) aus Tinte (5) auf die Oberfläche (2) druckt, d.h. eine erste Bahn (10) und nachfolgend eine zweite Bahn (11) druckt, wobei die beiden Bahnen (10,11) als Vollflächen gedruckt werden, wobei die Bahnen (10,11) in dem Streifen (12) X-Y-gestitcht werden, und wobei wenigstens eine der beiden Bahnen (10, 11) in dem Streifen (12) zusätzlich unter Einsatz einer vorgegebenen Funktion (15, 16a-e) für den Y-Verlauf der Tintenmenge gestitcht wird, **dadurch gekennzeichnet,**
**dass** die Art der Funktion (15, 16a-e) entlang der beiden Bahnen (10, 11) variiert wird oder dass die Breite des Streifens (12) entlang der beiden Bahnen (10, 11) variiert wird.

2. Verfahren nach Anspruch 1,
**dadurch gekennzeichnet,**
**dass** die erste Bahn (10) in dem Streifen (12) ausschließlich X-Y-gestitcht wird und dass die zweite Bahn (11) in dem Streifen (12) sowohl X-Y-gestitcht als auch zusätzlich unter Einsatz der vorgegebenen Funktion (15, 16a-e) für den Y-Verlauf der Tintenmenge gestitcht wird.

3. Verfahren nach einem der vorhergehenden Ansprüche,
**dadurch gekennzeichnet,**
**dass** auf der zweiten Bahn (11) Tintentropfen (4) in dem Streifen (12) derart gedruckt werden, dass gemäß des X-Y-Stitchings auf der zweiten Bahn nicht zu druckende Stellen dennoch zusätzlich unter Einsatz der vorgegebenen Funktion (15, 16a-e) für den Y-Verlauf der Tintenmenge gestitcht und gedruckt werden.

4. Verfahren nach einem der vorhergehenden Ansprüche,
**dadurch gekennzeichnet,**

## EP 3 547 221 B1

**dass** eine Breite der Funktion (15, 16a-e) entlang der beiden Bahnen (10, 11) variiert wird.

5. Verfahren nach Anspruch 4,
**dadurch gekennzeichnet,**
**dass** das Variieren der Art der Funktion (15, 16a-e) durch ein Wechseln zwischen Kurven (16a-e) unterschiedlicher Ordnung erfolgt, insbesondere zwischen einer Kurve zweiter Ordnung und wenigstens einer Kurve höherer Ordnung.

6. Verfahren nach einem der vorhergehenden Ansprüche,
**dadurch gekennzeichnet,**
**dass** das Variieren unter Einsatz einer vorgegebenen weiteren Funktion (17) für den Verlauf der Breite des Streifens (12) erfolgt.

7. Verfahren nach einem der vorhergehenden Ansprüche,
**dadurch gekennzeichnet,**
**dass** die Funktion (15, 16a-e) und/oder die weitere Funktion (17) in Abhängigkeit des Materials (2b) oder der Struktur (2c) der Oberfläche (2) oder des Materials (2b) oder der Struktur (2c) einer Beschichtung (2a) der Oberfläche (2) ausgewählt wird.

8. Verfahren nach einem der vorhergehenden Ansprüche,
**dadurch gekennzeichnet,**
**dass** die beiden Bahnen (10, 11) unter Einsatz einer Strahlungsquelle (7) und/oder Wärmequelle (7) gepinnt werden, d.h. die Tinte teilgehärtet und/oder teilgetrocknet wird.

**Claims**

1. Method of printing on a surface (2) of an object (1) wherein a print head (3) generating ink drops (4) prints at least two stripes (10, 12), i.e. a first stripe (10) and subsequently a second stripe (11), of ink (5) onto the surface (2), said two stripes (10, 12) adjacent to one another and overlapping in a strip (12), wherein the two stripes (10, 11) are printed as solid areas, wherein the stripes (10, 11) are X-Y stitched in the strip (12) and wherein at least one of the two stripes (10, 11) is additionally stitched in the strip (12) for the Y progression of the ink amount using a predefined function (15, 16a-e),
**characterized**
**in that** the type of the function (15, 16a-e) along the two stripes (10, 11) is varied or in that the width of the strip (12) along the two stripes (10, 11) is varied.

2. Method according to claim 1,
**characterized**
**in that** in the strip (12), the first stripe (10) is exclusively X-Y stitched and in that in the strip (12), the second stripe (11) is both X-Y stitched and additionally stitched using the predefined function (15, 16a-e) for the Y progression of the ink amount.

3. Method according to any one of the preceding claims,
**characterized**
**in that** on the second stripe (11), ink drops (4) in the strip (12) are printed in such a way that locations not to be printed on the second stripe in accordance with X-Y stitching are nevertheless additionally stitched and printed using the predefined function (15, 16a-e) for the Y progression of the ink amount.

4. Method according to any one of the preceding claims,
**characterized**
**in that** a width of the function (15, 16a-e) along the two stripes (10, 11) is varied.

5. Method according to claim 4,
**characterized**
**in that** the variation of the type of the function (15, 16a-e) is achieved by switching between curves (16a-e) of different orders, in particular between a curve of the second order and at least one curve of a higher order.

6. Method according to any one of the preceding claims,

**characterized**
**in that** the variation occurs using a predefined further function (17) for the progression of the width of the strip (12).

7. Method according to any one of the preceding claims,
   **characterized**
   **in that** the function (15, 16a-e) and/or the further function (17) is selected as a function of the material (2b) or structure (2c) of the surface (2) or of the material (2b) or structure (2c) of a coating (2a) of the surface (2).

8. Method according to any one of the preceding claims,
   **characterized**
   **in that** the two stripes (10, 11) are pinned, i.e. the ink is partially cured and/or partially dried, using a radiation source (7) and/or a heat source (7).

**Revendications**

1. Procédé d'impression de la surface (2) d'un objet (1), pour lequel une tête d'impression (3) générant des gouttes d'encre (4) imprime sur la surface (2) au moins deux bandes (10, 11) d'encre (5) adjacentes et se chevauchant en une bande de recouvrement (12), soit une première bande (10) suivie d'une deuxième bande (11), les deux bandes (10, 11) étant imprimées en aplat, les bandes (10, 11) étant dans la bande de recouvrement (12) agrafées en X-Y, et au moins l'une des deux bandes (10, 11) dans la bande de recouvrement (12) étant également agrafée en faisant appel à une fonction prédéterminée (15, 16a-e) pour le tracé Y de la quantité d'encre, **caractérisé en ce**
   **qu'**il y a variation du type de fonction (15, 16a-e) le long des deux bandes (10, 11) ou variation de la largeur de la bande de recouvrement (12) le long des deux bandes (10, 11).

2. Procédé selon la revendication 1,
   **caractérisé en ce**
   **que** la première bande (10) dans la bande de recouvrement (12) est uniquement agrafée en X-Y et que la deuxième bande (11) dans la bande de recouvrement (12) est à la fois agrafée en X-Y et agrafée en faisant appel à la fonction prédéterminée (15, 16a-e) pour le tracé Y de la quantité d'encre.

3. Procédé selon l'une des revendications précédentes,
   **caractérisé en ce**
   **que** des gouttes d'encre (4) sont imprimées sur la deuxième bande (11) dans la bande de recouvrement (12) de sorte que, conformément à l'agrafage X-Y sur la deuxième bande, les zones qui ne doivent pas être imprimées sont néanmoins également agrafées en faisant appel à la fonction prédéterminée (15, 16a-e) pour le tracé Y de la quantité d'encre et imprimées.

4. Procédé selon l'une des revendications précédentes,
   **caractérisé en ce**
   **qu'**il est procédé à une variation d'une largeur de la fonction (15, 16a-e) le long des deux bandes (10, 11).

5. Procédé selon la revendication 4,
   **caractérisé en ce**
   **que** la variation du type de fonction (15, 16a-e) est effectuée en alternant entre des courbes (16a-e) d'ordre différent, en particulier entre une courbe de second ordre et au moins une courbe d'ordre supérieur.

6. Procédé selon l'une des revendications précédentes,
   **caractérisé en ce**
   **que** la variation est effectuée en utilisant une autre fonction prédéterminée (17) pour le tracé de la largeur de la bande de recouvrement (12).

7. Procédé selon l'une des revendications précédentes,
   **caractérisé en ce**
   **que** la fonction (15, 16a-e) et/ou l'autre fonction (17) est choisie en fonction du matériau (2b) ou de la structure (2c) de la surface (2) ou du matériau (2b) ou de la structure (2c) d'un revêtement (2a) de la surface (2).

8. Procédé selon l'une des revendications précédentes,

**caractérisé en ce**

**que** les deux bandes (10, 11) sont fixées en utilisant une source de rayonnement (7) et/ou une source de chaleur (7), c'est-à-dire que l'encre est partiellement durcie et/ou partiellement séchée.

Fig.1

Fig.2a

Fig.2b

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1217578 A2
- EP 1671800 A2
- EP 2875953 A1
- US 2003132979 A1

**In der Beschreibung aufgeführte Nicht-Patentliteratur**

- Analysing, Understandung & Improving Image Quality. *IMI - Inkjet Printing Conference,* Februar 2015